# FASCICULE DE BREVET EUROPEEN

(11) **EP 0 433 133 B1**
(45) Date de publication et mention de la délivrance du brevet: **29.03.1995**
(21) Numéro de dépôt: 90403451.9
(22) Date de dépôt: 05.12.1990
(51) Int. Cl.: C01F 17/00, B01J 23/10

(54) **Procédé de préparation d'une dispersion colloidale d'un composé de cerium IV en milieu aqueux et dispersions obtenues**
Verfahren zur Herstellung einer wässerigen kolloidalen Dispersion einer Cerium-IV-Verbindung und hergestellte Dispersionen
Method for the preparation of an aqueous colloidal dispersion of a cerium IV compound and the dispersion thus prepared

(30) Priorité: 15.12.1989 FR 8916598
(43) Date de publication de la demande: 19.06.1991
(73) Titulaire: RHONE-POULENC CHIMIE, 92408 Courbevoie Cédex (FR)
(72) Inventeur: Zerrouk, Robert, F-43140 Saint Victor Malscours (FR); Picard, Françoise, F-94120 Fontenay-sous-Bois (FR)
(74) Mandataire: Esson, Jean-Pierre

(56) Documents cités:
- EP-A- 0 078 098
- EP-A- 0 097 563
- EP-A- 0 186 313
- EP-A- 0 308 311
- EP-A- 0 316 205
- WO-A-79/00248
- PATENT ABSTRACTS OF JAPAN vol. 12, no. 70 (C-479)(2917) 4 mars 1988, & JP-A-62 209039

## Description

La présente invention concerne un procédé de préparation d'une dispersion colloïdale d'un composé de cérium IV en milieu aqueux.

Elle concerne plus particulièrement un procédé de préparation d'une dispersion colloïdale d'un composé de cérium IV à faible caractère acide.

Dans l'exposé de l'invention qui suit, on désigne également par le terme "sol", la dispersion colloïdale d'un composé de cérium IV en milieu aqueux.

Les dispersions colloïdales d'un composé de cérium IV sont utilisées dans de nombreuses applications. Toutefois, une application importante de ces dispersions est la catalyse hétérogène et, en particulier, la catalyse du traitement des gaz d'échappement des moteurs à explosion interne, également appelé la catalyse des réactions de postcombustion automobile.

En effet, le cérium IV est un promoteur important de l'effet des catalyseurs utilisés notamment pour sa capacité de stocker l'oxygène et donc créer une sursaturation en oxygène au voisinage des éléments catalytiques tels que le platine, le palladium ou analogue.

Pour cela, les dispersions colloïdales sont utilisées comme solution d'imprégnation du cérium sur un support, l'oxyde de cérium étant produit par calcination du support imprégné et donc décomposition du composé de cérium IV contenu dans la dispersion.

Par ailleurs, le caractère acide de la dispersion colloïdale influe sur le procédé d'imprégnation du support, qui doit être adaptée aux caractéristiques de celui-ci et notamment à ses propriétés de surface.

C'est ainsi qu'il a été proposé des dispersions colloïdales d'un composé de cérium IV, un hydroxynitrate de cérium, qui présentent un caractère acide très fort avec un pH généralement inférieur à 1. Ces dispersions posent de nombreux problèmes lors de l'imprégnation quand le support à imprégner à un faible caractère basique, il a été proposé par la demande de brevet européenne n° 316 205 un procédé de fabrication de dispersions colloïdales à faible caractère acide, généralement présentant un pH supérieur à 3,5.

Ce procédé consiste à déstabiliser une dispersion aqueuse colloïdale d'un hydroxynitrate de cérium par un acide présentant un pKa plus faible que celui de l'acide nitrique, par exemple par de l'acide acétique.

Ce procédé est complexe car il comprend la fabrication successive de deux dispersions colloïdales, une première dispersion par attaque d'un hydrate avec l'acide nitrique, puis une seconde dispersion par déstabilisation de la première suspension par l'acide acétique. Il requiert de plus une consommation importante en réactifs tels que acide nitrique et acide acétique.

L'invention a notamment pour objet de remédier à ces inconvénients, en proposant un procédé de préparation d'une dispersion colloïdale d'un composé de cérium IV à faible caractère acide plus simple et moins coûteux en consommation de réactifs.

A cet effet, l'invention propose un procédé de fabrication d'une suspension colloïdale d'un composé de cérium IV consistant à attaquer un hydrate de cérium IV par une solution d'acide ou d'acides ayant un pKa compris entre 2,5 et 5,0, de sels alcalins ou ammoniacaux de ces acides ou un mélange de ceux-ci, puis à séparer le composé de cérium IV précipité et enfin à disperser le composé récupéré dans de l'eau.

Comme hydrate de cérium IV, on peut citer les hydrates obtenus notamment par précipitation en milieu basique et oxydant.

Les acides convenables pour l'invention sont notamment choisis dans le groupe comprenant l'acide acétique, l'acide formique, l'acide propionique, l'acide chloracétique. L'acide acétique est le composé préféré de l'invention.

On peut également utiliser les sels de ces acides ou un mélange sel/acide. Parmi les sels convenables, on peut citer les sels alcalins ou les sels ammoniacaux. Ces derniers sont ceux préférés. En effet, l'ammoniac n'est généralement pas un composé gênant dans les réactions de catalyse et d'autre part sera décomposé lors de la calcination du sol dans le cas où l'on désire obtenir un oxyde, cas le plus général en catalyse.

Les solutions d'attaque acides peuvent être soit un acide concentré ou une solution aqueuse. De préférence, la concentration totale en acide et sel de l'acide est comprise entre 1 mole/l et 3 mole/l.

Selon un autre caractéristique de l'invention, la quantité d'acide ajoutée est telle que le rapport molaire (acide + sel)/cérium IV soit compris entre 0,5 environ et 1,3 environ, de préférence entre 0,7 et 1,0.

Par acide, on entend soit un acide, un mélange d'acides, un sel, un mélange de sels ou un mélange acides/sels.

L'attaque de l'hydrate de cérium est réalisée par simple mélange de cet hydrate avec l'acide, à une température non critique. Cette température peut être voisine de la température ambiante (15°C - 25°C). On peut également réaliser cette attaque à chaud, jusqu'à une température de l'ordre de 100°C.

Le précipité obtenu est ensuite séparé du milieu réactionnel par tout moyen, par exemple, filtration, centrifugation, décantation.

Le précipité est ensuite dispersé dans de l'eau.

La concentration en cérium IV contenue dans la dispersion est comprise entre 1 mole/l et 3 mole/l.

La quantité de cérium IV sous forme peptisable contenue dans la dispersion est comprise entre 50 % et 100 % de la quantité totale de cérium, de préférence compris entre 95 % et 100 %.

La dispersion colloïdale du composé de cérium IV, qui est également un objet de l'invention présente un pH compris entre 1,5 et 5, de préférence compris entre 2,5 et 5.

Le composé formant les colloides a la formule chimique suivante :

Ce (A)ₓ(OH)₄₋ₓ

dans laquelle :
- -: A représente l'anion d'un acide ou d'un sel de cet acide présentant un pka compris entre 2,5 et 5,0.
- -: x est un nombre supérieur ou égal à 0,01 et inférieur ou égal à 0,7.

Ce composé peut également contenir d'autres anions en faible proportion, ces anions proviennent de l'hydrate utilisé comme produit de départ.

Ainsi, le composé peut contenir des anions nitrates dans une proportion molaire par rapport au cérium inférieure à 0,15, de préférence inférieure à 0,10.

Les particules dispersées ont des dimensions colloïdales dont le diamètre moyen hydrodynamique varie entre 8 et 15 nm.

Cette taille est déterminée par diffusion quasi élastique de la lumière selon la méthode décrite par Michael L. Mac Comwell dans "Analytical Chemistry, Vol n° 53, n° 8, 1007 (1981)".

Le diamètre moyen hydrodynamique des particules dépend du pH de la dispersion. Ansi les colloïdes sont d'autant plus gros que le pH du sol est plus élevé.

Les sols de l'invention sont stables dans les conditions habituelles de stockage et sont utilisées notamment pour la réalisation de catalyseur, par exemple par imprégnation d'un support tel qu'une alumine avec ce sol, puis calcination pour générer un oxyde de cérium.

L'invention sera illustrée par des exemples donnés ci-dessous uniquement à titre indicatif.

### Exemple 1

A 340 g d'hydrate de cérium, sont ajoutés 94 ml d'acide acétique 17 N et 90 ml d'eau distillée.

Une agitation magnétique est appliquée jusqu'à l'obtention d'une suspension homogène. Le pH de la suspension est de 1,6. Après filtration, la masse d'hydroxyacétate humide récupérée est de 380 g. Ce précipité est redispersé dans 760 ml d'eau distillée. Le sol obtenu est stable et a un pH de 1,5. Il contient 240 g/l de CeO₂. Ce sol peut être concentré jusqu'à 500 g/l par évaporation.

### Exemple 2

A 340 g d'hydrate de cérium est ajoutée une solution contenant 64,7 ml d'acide acétique 17N, 38,5 g d'acétate d'ammonium. La solution est amenée à un litre avec de l'eau distillée. Une agitation magnétique est appliquée jusqu'à l'obtention d'une suspension homogène. Le pH de la suspension est de 4,1. Après filtration, la masse d'hydroxyacétate humide récupérée est de 380 g. Ce précipité est redispersé dans 760 ml d'eau distillée. Le sol obtenu est stable et a un pH de 4,1. Il contient 260 g/l de CeO₂.

### Exemple 3

340 g d'hydrate de cérium sont ajoutés dans une solution contenant 82,3 ml d'acide acétique 17 N et 15,4 g d'acétate d'ammonium dans 1 litre d'eau.

Après agitation, on obtient une suspension et après filtration et redispersion du précipité on obtient un sol présentant un pH égal à 3, contenant 255 g/l de CeO₂.

Ce sol peut être concentré par évaporation jusqu'à une concentration de 500 g/l de CeO₂. La totalité du cérium est sous forme cérium IV colloïdale.

## Revendications

1. Procédé de fabrication d'une suspension colloïdale d'un composé de cérium IV, caractérisé en ce qu'il consiste à :
(i) attaquer un hydrate de cérium IV par un acide ayant un pka compris entre 2,5 et 5,0, ou un sel de cet acide, ou un mélange de ceux-ci,
(ii) à séparer le composé de cérium IV précipité
(iii) à disperser ledit composé dans de l'eau.

2. Procédé selon la revendication 1 caractérisé en ce que l'acide est choisi dans le groupe comprenant l'acide acétique, l'acide propionique, l'acide chloroacétique, l'acide formique.

3. Procédé selon la revendication 1 ou 2 caractérisé en ce que le sel d'acide est choisi parmi les sels alcalins ou ammoniacaux desdits acides.

4. Procédé selon l'une des revendications précédentes caractérisé en ce que l'attaque est réalisée avec une solution d'acides, de sels ou un mélange de ceux-ci présentant une concentration totale en acide et sel de l'acide comprise entre 1 mole/l et 3 mole/l.

5. Procédé selon l'une des revendications précédentes caractérisé en ce que le rapport molaire (acide + sel)/cérium IV dans l'étape d'attaque est compris entre 0,5 et 1,3, de préférence entre 0,7 et 1,0.

6. Procédé selon l'une des revendications précédentes caractérisé en ce que l'attaque est réalisée à une tempéraure comprise entre la température ambiante (15-20°C) et 100°C.

7. Procédé selon l'une des revendications précédentes caractérisé en ce que la suspension obtenue à l'étape (iii) est concentrée par évaporation.

8. Suspension colloïdale d'un composé de cérium IV susceptible d'être obtenue par le procédé selon l'une des revendications précédentes caractérisé en ce que le composé a la formule chimique :
Ce(A)ₓ(OH)₄₋ₓ
dans laquelle :
A est un anion d'un acide ou d'un sel de cet acide, ayant un pka compris entre 2,5 et 5,0
x est un nombre supérieur ou égal à 0,01 et inférieur ou égal à 0,7 et un pH compris entre 1,5 et 5 et en ce que le diamètre moyen hydrodynamique des colloïdes est compris entre 8nm et 15nm.

9. Suspension selon la revendication 8 caractérisée en ce que la concentration en cérium est comprise entre 1 mole/l et 3 mole/l.

10. Suspension selon la revendication 8 ou 9 caractérisée en ce que la proportion de cérium IV sous forme colloïdale est comprise entre 50 et 100% de la quantité totale de cérium contenue dans la suspension.

11. Suspension selon l'une des revendications 8 à 10 caractérisée en ce que le rapport molaire (acide + sel)/cérium IV est compris entre 0,5 et 1,3, et de préférence entre 0,7 et 1,0.

12. Suspension selon l'une des revendications 8 à 11 caractérisée en ce que le rapport molaire nitrate/cérium est inférieur à 0,15, de préférence inférieur à 0,10.

## Claims

1. Process for the production of a colloidal suspension of a cerium IV compound, characterized in that it consists in:
(i) attacking a cerium IV hydrate with an acid which has a pKa of between 2.5 and 5.0, or a salt of this acid, or a mixture thereof,
(ii) separating out the precipitated cerium IV compound,
(iii) dispersing the said compound in water.

2. Process according to claim 1, characterized in that the acid is chosen from the group comprising acetic acid, propionic acid, chloroacetic acid and formic acid.

3. Process according to claim 1 or 2, characterized in that the acid salt is chosen from the alkali metal salts or the ammonium salts of the said acids.

4. Process according to one of the preceding claims, characterized in that the attack is carried out with an acid solution, a salt solution or a mixture thereof, this solution having a total concentration of acid and acid salt of between 1 mol/l and 3 mol/l.

5. Process according to one of the preceding claims, characterized in that the (acid + salt)/cerium IV molar ratio in the attack step is between 0.5 and 1.3, preferably between 0.7 and 1.0.

6. Process according to one of the preceding claims, characterized in that the attack is carried out at a temperature between room temperature (15-20°C) and 100°C.

7. Process according to one of the preceding claims, characterized in that the suspension obtained in step (iii) is concentrated by evaporation.

8. Colloidal suspension of a cerium IV compound, which suspension may be obtained by the process according to one of the preceding claims, characterized in that the compound has the chemical formula:
Ce(A)ₓ(OH)₄₋ₓ
in which:
A is an anion of an acid or of a salt of this acid, having a pKa of between 2.5 and 5.0
x is a number greater than or equal to 0.01 and less than or equal to 0.7, and a pH of between 1.5 and 5, and in that the mean hydrodynamic diameter of the colloids is between 8 nm and 15 nm.

9. Suspension according to claim 8, characterized in that the cerium concentration is between 1 mol/l and 3 mol/l.

10. Suspension according to claim 8 or 9, characterized in that the proportion of cerium IV in colloidal form is between 50 and 100 % of the total amount of cerium contained in the suspension.

11. Suspension according to one of claims 8 to 10, characterized in that the (acid + salt)/cerium IV molar ratio is between 0.5 and 1.3, and preferably between 0.7 and 1.0.

12. Suspension according to one of claims 8 to 11, characterized in that the nitrate/cerium molar ratio is less than 0.15, preferably less than 0.10.

## Patentansprüche

1. Verfahren zur Herstellung einer kolloidalen Suspension einer Cer(IV)-Verbindung, dadurch gekennzeichnet, daß man:
(i) ein Cer(IV)-hydrat mit einer Säure, die einen pKa in Bereich von 2,5 bis 5,0 aufweist, oder mit eine Salz dieser Säure, oder mit einem Gemisch aus beiden aufschließt,
(ii) die ausgefallene Cer(IV)-Verbindung abtrennt und
(iii) diese Verbindung in Wasser dispergiert.

2. Verfahren nach Anspruch 1, dadurch gekennzeichnet, daß man die Säure aus der Gruppe umfassend Essigsäure, Propionsäure, Chloressigsäure und Ameisensäure, auswählt.

3. Verfahren nach Anspruch 1 oder 2, dadurch gekennzeichnet, daß man das Salz der Säure aus den Alkalisalzen oder ammoniakalischen Salzen der genannten Säuren auswählt.

4. Verfahren nach einem der vorangehenden Ansprüche, dadurch gekennzeichnet, daß man den Aufschluß mit einer Lösung von Säuren, Salzen oder einem Gemisch dieser durchführt, die eine Gesamt-Konzentration an Säure und Salz der Säure im Bereich von 1 mol/l bis 3 mol/l aufweist.

5. Verfahren nach einem der vorangehenden Ansprüche, dadurch gekennzeichnet, das das Molverhältnis (Säure + Salz)/Cer(IV) in der Aufschlußstufe 0,5 bis 1,3, vorzugsweise 0,7 bis 1,0 beträgt.

6. Verfahren nach einem der vorangehenden Ansprüche, dadurch gekennzeichnet, daß man den Aufschluß bei einer Temperatur in Bereich von Umgebungstemperatur (15-20°C) bis 100°C durchführt.

7. Verfahren nach einem der vorangehenden Ansprüche, dadurch gekennzeichnet, daß man die in der Stufe (iii) erhaltene Suspension durch Eindampfen einengt.

8. Kolloidale Suspension einer Cer(IV)-Verbindung, die durch das Verfahren nach einem der vorangehenden Ansprüche erhalten werden kann, dadurch gekennzeichnet, daß die Verbindung der Formel:
Ce(A)ₓ(OH)₄₋ₓ
entspricht, in der:
A das Anion einer Säure oder eines Salzes dieser Säure mit einem pKa im Bereich von 2,5 bis 5,0 ist;
x eine Zahl gleich oder größer 0,01 und gleich oder kleiner 0,7 ist, und daß der pH-Wert im Bereich von 1,5 bis 5 liegt und daß der mittlere hydrodynamische Durchmesser der Kolloidteilchen im Bereich von 8 nm bis 15 nm liegt.

9. Suspension nach Anspruch 8, dadurch gekennzeichnet, daß die Konzentration an Cer 1 mol/l bis 3 mol/l beträgt.

10. Suspension nach Anspruch 8 oder 9, dadurch gekennzeichnet, daß der Anteil an Cer(IV) in kolloider Form 50 bis 100 % der Gesamtmenge Cer ausmacht, die in der Suspension enthalten ist.

11. Suspension nach einem der Ansprüche 8 bis 10, dadurch gekennzeichnet, daß das Molverhältnis (Säure + Salz)/Cur(IV) im Bereich von 0,5 bis 1,3, vorzugsweise im Bereich von 0,7 bis 1,0 liegt.

12. Suspension nach einem der Ansprüche 8 bis 11, dadurch gekennzeichnet, daß das Molverhältnis Nitrat/Cer unter 0,15, vorzugsweise unter 0,10 liegt.
